# EUROPEAN PATENT SPECIFICATION

(11) **EP 4 428 368 B1**
(45) Date of publication and mention of the grant of the patent: **15.01.2025**
(21) Application number: 23160522.1
(22) Date of filing: 07.03.2023
(51) Int. Cl.: F04B 39/12, H02G 3/08, H02G 15/013, F04B 35/04

(54) **ELECTRICAL FEEDTHROUGH ASSEMBLY**
ELEKTRISCHE DURCHFÜHRUNGSANORDNUNG
ENSEMBLE DE TRAVERSÉE ÉLECTRIQUE

(43) Date of publication of application: 11.09.2024
(73) Proprietor: SCHOTT AG, 55122 Mainz (DE)
(72) Inventor: HARTL, Helmut, 3400 Klosterneuburg (AT)
(74) Representative: Schott Corporate IP

(56) References cited:
- EP-B1- 2 039 932
- CN-U- 212 717 102
- CN-Y- 201 210 543
- KR-A- 20210 134 807
- US-A- 4 964 788
- US-A1- 2021 344 139

## Description

The invention relates to an electrical feedthrough assembly comprising a base body, preferably configured as e-compressor terminal, especially plate like element, for the attachment to a housing, preferably an e-compressor, with at least one opening for at least one conductor embedded in fixation material that is fed into each of the respective openings providing a seal. Further aspects of the invention relate to a method for manufacturing of such an electrical feedthrough assembly and to an electric compressor comprising such an electrical feedthrough assembly.

Housings for electronic components usually require a plurality of electrical feedthroughs in order to enable electrical connections from outside to the inner part of the housing, which accommodates e.g. parts of an electronic compressor in the housing. The electrical feedthroughs should be fluid tight or even hermetic in order to protect the components inside the housing from the environment and/or to contain gases or fluids in the housing. In order to provide such fluid-tight or hermetic feedthroughs for an electric conductor arranged in an opening of the housing, glass-to-metal seals may be used. A fixation material, for example a glass material, is used to seal the opening and to hold the conductor within the opening. The fixation material also provides an electrical insulation between the conductor and the housing.

In order to provide additional electrical insulation between the housing and the conductor and, if more than one conductor is present between the conductors, it is known to arrange an additional insulation element on the electrical feedthrough. The insulation element at least partially surrounds the conductor and enlarges a so-called creepage distance between a conductor and the housing and/or between two conductors. The insulation element for extending the creepage distance may be, for example, a rubber or plastic sleeve, which at least partially surrounds a conductor.

For connecting such an insulation element to the feedthrough, in particular to a base body of the feedthrough, it is known to use injection molding, wherein the insulation element is directly molded onto the base body. International patent application WO 2022/008344 A1 discloses a housing part comprising a feedthrough. The feedthrough comprises a base body and a conductor which is fed through an opening of the base body. A glass material is provided to hold the conductor in the opening and to electrically insulate the conductor from the base body. A plastic, rubber and/or elastic material is directly molded onto the feedthrough and at least partially encloses a conductor of the feedthrough so that the risk for a short circuit in case of the presence of a water film is reduced.

Direct molding allows for tight connection between a base body of the feedthrough and the insulation element. However, specialized molding tools are required for each feedthrough type, as the half-finished feedthrough must be inserted into the mold. Also, any casting burr must be removed after molding. Still further, the molding tools as well as the material injected into the mold will exert forces onto the feedthrough, in particular onto the fixation material, which may damage the feedthrough and may be a cause of low yield of good feedthrough elements.

Such additional insulating elements may also be prepared as separate parts and can then be attached to the glass-to-metal-seal feedthrough, for example by means of an epoxy-glue. Glue is applied onto the insulting element and/or onto the feedthrough and then the insulating element is placed onto the feedthrough, wherein the conductor(s) slide through openings of the insulating element. However, it is difficult to reliably apply the correct amount of glue such that the insulating element is securely attached without any gaps in the glue and without excess glue overflowing onto other parts of the feedthrough. Overflowing glue may block parts of the feedthrough assembly required for mounting to a housing or may cover parts of the conductor which are intended to make electrical contact, for example with a connector. Further, any corrections to an alignment between the parts must be completed before the glue has cured.

EP 2 039 932 B1 discloses a sealed terminal device for a motor-driven compressor comprising an insulating element. The insulating element includes a groove or a cavity to increase a creepage distance for insulation between two terminals.

It is an object of the present invention to provide a feedthrough assembly having at least one sealed conductor and an additional insulation element for extending of a creeping distance between the conductor and a base body of the feedthrough, which is easy to manufacture and has a secure and reliable connection between the insulation element and the base body.

### Disclosure of the invention

An electrical feedthrough assembly is proposed, preferably configured as an e-compressor terminal, especially in form of a plate like element, for the attachment to a housing, preferably a housing of an e-compressor. The feed through assembly comprises a base body with at least one opening for at least one conductor embedded in a fixation material that is fed into each of the respective openings and thus sealing the respective opening.

The electrical feedthrough assembly further comprises at least one insulation element affixed to the base body, the insulation element having at least an insulation section for a conductor, the insulation section having an conductor opening through which the respective conductor is fed, the insulation element being configured and arranged such that a cavity is formed between the base body and the insulation section. The insulation section further comprises at least one further opening allowing access to the cavity, the cavity being at least partially filled with an adhesive for forming a connection between the base body and the insulation section of the insulation element.

The proposed cavity serves as a confinement for the adhesive. The adhesive is in particular confined to a space comprising the exposed surface of the fixation material and portions of the surfaces of the base body, the conductor and the insulation element.

Preferably, the cavity is completely filled with the adhesive. Further, the adhesive in the cavity is particularly preferably free from any air bubbles trapped inside the adhesive. The at least one further opening is configured to allow access to the inside of the cavity from the outside and thus enables introduction of the adhesive into the cavity. In order to compensate for manufacturing tolerances, the volume provided by one or more further openings may be used as a reservoir for receiving any excess adhesive after the cavity has been completely filled. Accordingly, the number and size of the further openings is preferably configured to provide a sufficiently large reservoir volume.

The insulation element is preferably arranged over the conductors such that the cavity at least partially surrounds the respective conductor.

In case more than one conductor is fed through the base body, the feedthrough assembly may comprise one insulation element comprising individual conductor opening for each of the conductors. Alternatively, the feedthrough assembly may comprise more than one insulation element, wherein each of the insulation elements has respective insulation sections with conductor openings for a certain number of conductors, for example two or three conductors, or has a single conductor opening for a single conductor. In the latter case, the number of insulation elements corresponds to the number of conductors.

Similarly, an insulation section of the insulation element may have a single conductor opening for a single conductor or may have several, e.g. two or three conductor openings and may thus accommodate several conductors, one conductor per conductor opening.

Preferably, a wall of the conductor opening touches the respective conductor. It is particularly preferred that the wall of the conductor opening creates a seal with the conductor so that the cavity is sealed with respect to the conductor.

Preferably, the insulation element has at least one inner sealing section touching the base body so that the formed cavity is sealed against the surface of the base body. Particularly preferably, the insulation section has a cylindrical portion having an inner sealing section touching the base body, thereby sealing each formed cavity against the respective surface of the base body. Thus, any overflow of adhesive introduced into the cavity onto neighboring portions of the base bodies surface is avoided.

Preferably, the cavity of the insulation section comprises a top wall, which is preferably arranged parallel to a top surface of the base body, wherein the top wall comprises the conductor opening and the at least one further opening.

Preferably, each formed cavity has 1 to 10, preferably 2 to 8, especially preferably 4 to 6 further openings. In case an insulation section has exactly one cavity, the insulation section accordingly comprises 1 to 10, preferably 2 to 8, especially preferably 4 to 6 further openings. Preferably, the further openings are symmetrically arranged around the conductor opening.

The insulation element is preferably configured to provide a sealing function so that the insulation element may serve as a sealing element between the base body of the feedthrough assembly and e.g. a housing or a housing part of a device such as an electric compressor. Accordingly, it is preferred that the insulation element comprises an outer sealing section, which surrounds all insulation sections of the insulation element and is configured to touch the base body. Preferably, the outer sealing section has an O-ring like shape. Further, it is preferred to form the outer sealing section as single piece together with the insulation element. Alternatively to arranging a single outer sealing section which surrounds all insulation sections, each of the insulation sections may be provided with a respective outer sealing section which may have an O-ring like shape. This is in particular useful for embodiments in which a separate insulation element is arranged for each of the individual conductors. In such cases, the outer sealing section may also serve as inner sealing section to seal the cavity against the base body.

Suitable materials for the insulation element may be selected from resilient material. Preferred resilient materials include in particular natural or synthetic rubbers, in particular fluoroelastomers, ethylene propylene diene monomer (EPDM) rubbers, hydrogenated nitrile-butadiene rubbers (HNBR) and silicone rubbers.

Further suitable materials for the insulation element include thermoplastic or thermosetting plastic materials.

With respect to a housing of an electrical compressor, to which the electrical feedthrough assembly may be attached, the insulation element may be arranged on the side facing towards the outside of the housing. Additionally or alternatively, the insulation element may be arranged on the side facing towards the inside of the housing. In particular, the assembly may comprise two insulation elements, one arranged on the outside facing side and one on the inside facing side.

For example, when the proposed electrical feedthrough assembly is connected to a housing of an electric compressor, it is preferred to use a silicone rubber for an insulation element on the side of the assembly facing towards the inverter. For insulation elements facing towards the motor side, it is preferred to use a HNBR rubber.

In principle, the adhesive may be selected from any known electrically insulating adhesive material. However, the adhesive is preferably an epoxy adhesive. Further, electrically insulating casting materials may be used as adhesive.

The fixation material is preferably selected from a glass, a ceramic or a glass ceramic material. Preferably, the fixation material is a glass material so that a glass-to-metal seal (GTMS) is provided between the base body, the conductor and the fixation material.

It is preferred that the fixation material is arranged such that the fixation material does not extend beyond the at least one opening in the base body, at least on the side facing towards the insulation element. In particular, a glass meniscus surrounding the conductor and extending beyond the base body should be avoided.

Arranging the fixation material such that it does not extend beyond the base body allows bending of the conductors without damaging the fixation material. For example, when a glass material is used as fixation material, a formed glass meniscus surrounding the conductor and extending beyond the opening would be subject to strong forces when the conductor is bent which could lead to cracks or damages to the glass. Thus, the proposed arrangement of the fixation material allows bending of the conductors as required. Further, the shape of such a glass meniscus is subject to strong variation making it difficult to determine the correct amount of adhesive.

Preferably, the material of the base body is a metal. More preferably, the base body comprises as a material steel, especially stainless steel, most preferred structural steel, preferably microalloyed steel, most preferred structural steel in form of microalloyed steel. Microalloyed steel is a type of alloy steel that contains small amounts of alloying elements (0,05 to 0,15 %), including niobium, vanadium, titanium, molybdenum, zirconium, boron and rare-earth metals. They are used to refine the grain microstructure or facilitate precipitation hardening. The yield strength of microalloyed steel is between 275 and 750 MPa without heat treatment. Weldability is good, and can even be improved by reducing carbon content while maintaining strength. Fatigue life and wear resistance are superior to similar heat-treated steels. Cold-worked microalloyed steels do not require as much cold working to achieve the same strength as other carbon steel; this also leads to greater ductility. By using microalloyed steel as material, a high bending stiffness and strength could be provided.

Preferably, the base body, the least one conductor and the fixation material form a compression seal. Accordingly, a first coefficient of thermal expansion of the base body is preferably chosen to be larger than a second coefficient of thermal expansion of the fixation material. Preferably, for obtaining a compression seal, a difference between the first coefficient of thermal expansion is at least 2 ppm/K and more preferably the difference between the first coefficient of thermal expansion is at least 5 ppm/K. A third coefficient of thermal expansion of the conductor material is preferably chosen to be about equal to or less than the second coefficient of thermal expansion of the fixation material. Two coefficients of thermal expansion are considered to be about equal if the difference is less than 2 ppm/K.

Alternatively to a compression seal, the material of the base body, the fixation material and the conductor material may be chosen such that their respective coefficients of thermal expansion are about equal, wherein a difference of less than 2 ppm/K is considered to be about equal.

Preferably, the formed seal between the opening of the base body, the fixation material and the conductor is a hermetical seal. In particular a feedthrough having a He leakage rate of better than 1•10-7 mbar I/s, especially 1•10-8 mbar l/s for a pressure difference of 1 bar is considered to be hermetic.

Preferably, a part of the surface of the base body, in particular a part of the surface of the base body defining a wall of the cavity, is configured as an adhesion area having a roughness e.g. provided by a stamping or an embossing process for enhancing adhesion of the adhesive. The adhesion area may in particular define a wall of the cavity. The roughness can also be provided by a rolled textured sheet material or by a rolled texture with a stamping step by a tool. Due to the good adhesion a connection between the material of the base body and the adhesive is improved. Additionally or alternatively, structures such as tenons and/or pins and/or spigots can be provided within the adhesion area. Further, structures such as a ring embossing and/or ring shaped grooves can be formed to improve the adhesion. Such tenons can be formed from the sheet, eventually in form of a mushroom shaped head part. A ring embossing around the fixation material in which the conductor is fed through the base body would be possible. In any case by the structure of the surface of the base body within the adhesion area, the connection of adhesive to the base body can be improved. In addition or alternatively to structuring a part of the surface of the base body it is also conceivable to provide such structures on parts of the surface of the insulation element.

Preferably, a part of the surface of the base body, in particular a part of the surface arranged adjacent to the inner sealing section or the outer sealing section of the insolation element, is configured as a sealing area. In the sealing area, it is preferred that the surface of the base body is smooth and flat. In particular, it is preferred that within the sealing area the surface of the base body has a flatness according to DIN ISO 1101 of at least 0.1 mm, preferably at least 0.07 mm, most preferably from 0.01 mm to 0.07 mm. Such a smooth and/or flat area facilitates creating a good and tight seal. A surface roughness is preferably R_{z}10 or better.

Preferably, the base body of the feedthrough assembly comprises mounting means to facilitate attaching of the feedthrough assembly to a housing or housing part of a device, such as an electric compressor. Preferably, the mounting means are configured as attachment bores or screw bores, wherein the base body preferably comprises at least two of said bores. The base body may additionally or alternatively comprise centering means such as protrusions or indentations to facilitate exact placement of the base body and thus of the feedthrough assembly with respect to a housing or part of a housing of a device.

The base body may be configured to have an elongated shape in which all the openings for the conductors are arranged along a line. However, other configurations, for example a round base body where the openings are evenly distributed along a circle, are also possible.

Preferably, the base body comprises means for improving resistance against deformation such as bending. In one embodiment, the base body may comprise a pulled up edge, which fully or partially surrounds the base body. In case the base body has an elongated shape, it is preferred to arrange pulled up edges on the long sides of the base body.

The pulled up edge and the base body may be configured as a single part or the pulled up edge may be configured as a separate part, which could be joined with the base body by fusing. The advantage of the pulled up edge to be a separate part is that production of both parts - base body and pulled up edge - could be organized separately.

However, in an alternative embodiment, the base body is reshaped in order to provide the pulled up edge. Such a reshaping process could be e.g. stamping a plate like precursor element in order to form the base body.

The pulled up edge is in both embodiments a part arranged along an edge of the base body and is thus not interfering with the openings of the base body or a sealing area arranged on a surface of the base body.

Additionally or alternatively, the base body may comprise one or more elevated area(s) and/or one or more recess area(s). Such an elevated area may be a single area encompassing all openings of the base body. In an alternative embodiment, the base body could comprise several separated elevated areas, wherein each of the elevated areas encompasses a single one of the openings.

The elevated area(s) and recess area(s) may, for example be formed into a plate like precursor of the base body e.g. by means of a stamping process to form the base body.

The insulation element increases an electrical insulation distance or creeping distance between a conductor and the base body and/or between two conductors. Thus, the insulation element contributes to reduce the risk of short circuits, especially in case of wet or humid environments. In such environments, a water layer and/or dirt layer or the like might deposit on the surfaces of the feedthrough assembly, in particular on a surface of the fixation material insulating a conductor from the base body. Such a water film wetting the materials of the feedthrough assembly can in particular occur easily in an e-compressor with the feedthrough assembly configured as an e-compressor terminal. This is because the e-compressor has a very low temperature e.g. of lower than e.g. 5 °C or even negative temperatures, whereas the ambient temperature e.g. in the summer time might be higher than 20 °C. In such a case, a water film may form due to condensation. By additionally insulating the conductor from the material of the base body and thus from a housing of a device comprising the feedthrough assembly, for example in e-compressor applications, short circuits due to conductive water and/or dirt films can be prevented.

Using an adhesive for mounting the insulation element allows the insulation element to be prepared as a separate part. In contrast to known adhesive attachments of known insulation elements, the proposed cavity and the sealing of the cavity by means of the inner sealing section confines the adhesive material to a defined space and avoids any spilling or overflow of the adhesive onto sensitive areas of the feedthrough assembly. In particular, areas intended for creating a tight seal, such as a sealing area of the base body, as well as portions of the conductor intended for establishing a good electrical contact remain free from any undesired contamination with the adhesive.

Preferably, the cylindrical section of the insulation element has an extension portion, which extends beyond the top wall. Preferably, the extension portions surrounds the conductor at a distance and extends an insulation distance or creeping distance further. The extension portion may be provided with ribs, ridges or grooves configured to form a form-fit connection with a connector that may be slid over the conductor to form an electrical connection. By means of the ridges or grooves, such a connector may be secured in place. Further, the ribs, ridges or grooves may provide a seal to prevent dirt or fluids from entering the space between the conductor and the extension portion when a connector is attached. The ribs, rings, ridges and/or grooves can be arranged such that an annular ring or groove is formed. Preferably, such ribs, rings, ridges or grooves are arranged on the side of the extension portion facing towards the conductor, thus allowing sealing any gap between the insulation element and a connector. Additionally or alternatively, the extension portion may be provided with ribs, in particular in the form of one or more annular rings, ridges or grooves arranged on the outside facing wall. It is also possible to arrange set-in-rings over the outside facing wall of the extension portions. Such a set-in-ring may, for example, be secured in a groove arranged in the outside facing wall of the extension portion.

In one embodiment of the invention, further insulation to the conductors is only provided on one side of the feedthrough assembly, for example on a bottom side of the base body. Alternatively, insulation elements may be arranged and attached to the base body on both sides, e.g. an upper side and a bottom side, so that both sides of the fed through conductors are protected by insulation elements. Both insulation elements may be attached and fixed to the base body as described herein by means of an adhesive material located within a cavity defined by the base body and the insulation element.

A further aspect of the invention relates to a method for manufacturing of such an electrical feedthrough assembly. In a first step, an electrical feedthrough assembly is provided. The base body assembly comprises a base body having at least one conductor embedded in fixation material that is fed through an opening of the base body providing a glass-to-metal seal (GTMS). If required, the surfaces of the base body can be cleaned or pretreated to improve adhesion.

In a subsequent second step, at least one insulation element is provided and placed onto the base body such that the at least one conductor is fed through a conductor opening of an insulation section of the insulation element. Further, the insulation element is configured and arranged such that a cavity is formed between the base body and the insulation section. As no adhesive material is present, yet, there is no time restriction, for example by a cure time, for carefully placing and aligning the base body and the insulation element.

In a subsequent third step, an adhesive is injected into the cavity. Preferably, the adhesive is injected into the cavity through at least one further opening in the insulation element allowing access to the cavity. For example, an injection needle may be introduced into one of the further openings for injecting the adhesive into the respective cavity. The cavity is at least partially filled with adhesive in this step. Preferably, the cavity is completely filled with the adhesive and in particular does not comprise air bubbles. In order to allow venting of air, it is preferred that the insulation element has more than one further opening allowing access to the cavity.

During the injection of the adhesive, the insulating element is preferably pressed against the base body in order to ensure that an inner sealing section of the insulation element is firmly touching the base body and seals the cavity against the base body. After injection of the adhesive, the adhesive is cured.

Preferably, the cavity is completely filled with the adhesive. In order to compensate for manufacturing tolerances, the volume provided by the further openings may be used as a reservoir for receiving any excess adhesive after the cavity has been completely filled. For example, a set dosage volume of the adhesive may be chosen such that in average the volume provided by the further openings is half filled with the adhesive.

Introduction of the adhesive is preferably performed such that no air bubbles remain trapped within the cavity so that the adhesive inside the cavity is free from any voids or bubbles. This may be achieved by keeping at least one of the further openings of each insulation section open during the introduction of the adhesive so that air contained in the cavity may vent out of the cavity through the respective further opening.

The proposed injection of the adhesive material into the defined cavity has the particular advantage that the adhesive material is confined to the space inside the closed cavity and cannot flow freely. This allows the use of adhesive materials without the usual limitations to adhesives having high viscosities. Adhesives having relatively low viscosities can be more precisely dosed and any remaining air bubbles can more easily be removed so that a gap-free and bubble-free adhesive film covering at least the entire surface of the base body and the fixation material exposed within the cavity may be obtained. Thus, a reliable electrical insulation is ensured. Additionally, it is no longer required to apply the adhesive before the insulation element is brought into contact with the base body as the proposed further openings allow direct access to the cavity intended for receiving the adhesive. Accordingly, the two parts may be brought into contact and may be carefully adjusted into the correct relative position without any restrictions by a cure time of an adhesive as in the proposed method the adhesive is only introduced into the cavity after the parts have been correctly placed and aligned. All cavities may be filled simultaneously with the adhesive e.g. by providing at least one injection needle per cavity.

In an optional subsequent fourth step, curing of the adhesive may be performed and/or accelerated by subjecting the formed feed through to heat and/or radiation suitable for curing the adhesive.

The electrical feedthrough assembly described herein is particularly suited for use as a connection terminal for an electric compressor. The feedthrough assembly may be configured as part of a housing of the electric compressor or may be attached to a housing or a part of a housing for an electric compressor.

Accordingly, it is a further aspect of the invention to provide an electric compressor comprising one of the electrical feedthrough assemblies described herein.

It is to be understood that the features mentioned above and those to be explained below can be used not only in the combination indicated in each case, but also in other combinations or alone, without leaving the scope of the present invention.

Preferred embodiments of the invention are shown in the figures and will be explained in more detail in the following description, wherein identical reference signs refer to identical or similar components or elements.

### Brief description of the figures:

Figure 1 shows an example embodiment of a feedthrough assembly comprising a base body and an insulation element in bottom view,
Figure 2 shows a first cross-section of the feedthrough assembly of figure 1,
Figure 3 shows a second cross-section of the feedthrough assembly of figure 1,
Figure 4 shows a perspective view of the insulation element of the feedthrough assembly,
Figure 5 shows a first cross section of a second embodiment of the base body,
Figure 6 shows a second cross section of the second embodiment of the base body,
Figures 7a to 7d show an embodiment of a feedthrough assembly having individual insulation elements for each of the conductors, and
Figures 8a to 8d show an embodiment of a feedthrough assembly comprising set-in-rings.

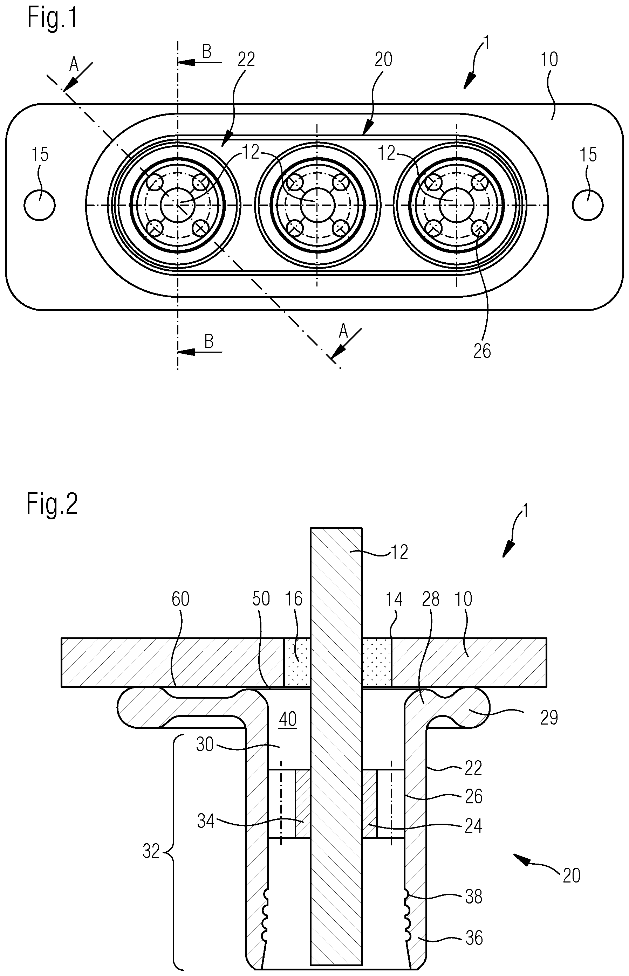

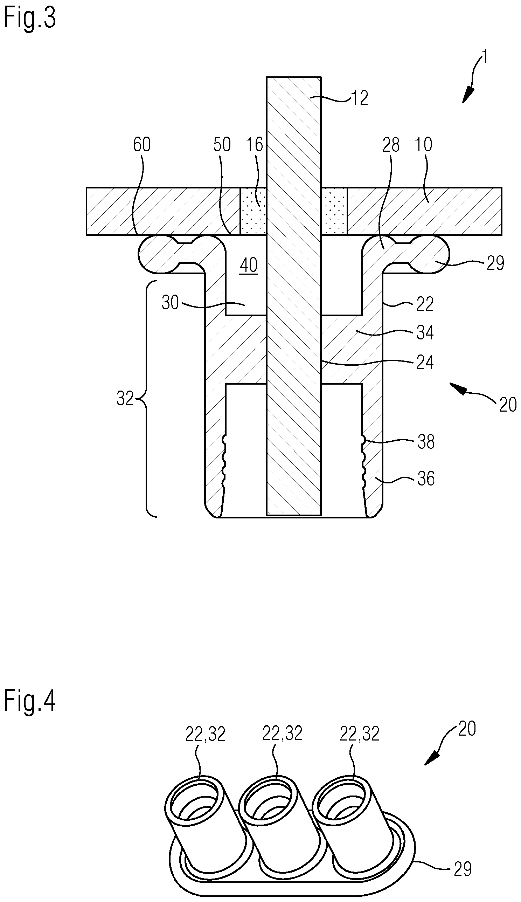

Figures 1 to 3 show an exemplary embodiment of a feedthrough assembly 1. Figure 1 shows the feedthrough assembly 1 in bottom view. Figure 2 shows a first cross section along a plane marked with A-A in figure 1 and Figure 3 shows a second cross section along a plane marked with B-B in figure 1. The feedthrough assembly 1 comprises a base body 10. In this exemplary embodiment, the feedthrough assembly 1 comprises three conductors 12, which are fed through the base body 10.

The base body 10 is preferably made from a metal and is configured for attachment to a housing or a part of a housing of a device such as an e-compressor (not shown). In the exemplary embodiment depicted in figures 1 to 3, screw bores 15 are provided to facilitate a screw connection to a housing (not shown). Other embodiments may comprise different or additional mounting and/or alignment means for attachment of the feedthrough assembly 1 to a housing. The base body 10 as shown in figures 1 to 3 is a flat piece.

As can be seen in the cross-section views of figures 2 and 3, each of the three conductors 12 is fed through an opening 14 in the base body 10 and is held by a fixation material 16. The fixation material 16 is, for example, selected from a glass and is electrically insulating. Further, the fixation material 16 is arranged such that it does not protrude beyond the opening 14. In particular, the fixation material 16 does not form a glass meniscus surrounding the conductor 12 and extending beyond the base body 10. In the embodiment of figures 1 to 3, the base body 10 has an elongated shape in which the three openings 14 are arranged along a line. Other configurations, for example where the openings 14 are evenly distributed along a circle, are also possible.

In order to further improve an electrical insulation between the base body 10 and the conductors 12, an insulation element 20 is provided. In the exemplary embodiment of figures 1 to 3, the insulation element 20 is attached to a bottom side of the base body 10. However, the insulation element 20 could also be arranged on a top side of the base body 10 and it is also possible to provide two insulation elements 20, one attached to the bottom side and one attached to the top side of the base body 10.

The insulation element 20 comprises in the shown exemplary embodiment three insulation sections 22, one for each of the conductors 12. Each of the insulation sections 22 has a cylindrical section 32, which surrounds a part of the conductor 12 in a distance. Further, each insulation section 22 has a top wall 34 having a conductor opening 24. The insulation element 20 is mounted to the base body 10 such that the conductors 12 are fed through the conductor openings 24.

A cavity 30 is defined in a space between the top wall 34 and a bottom surface of the base body 10. A part of the cylindrical section 32 of the insulation section 22 forms a side wall of said cavity 30 and the conductor 12 is fed through the cavity 30. At the interface between the part of the cylindrical section 32 forming a side wall of the cavity 30 and the bottom surface of the base body 10, an inner sealing section 28 is arranged. The inner sealing section 28 is shaped similar to an O-ring and is formed as single piece together with the insulation element 20. The inner sealing section 28 provides a seal between the cylindrical section 32 of the insulation section 22 and thus seals the cavity 30 in the direction of the base body 10.

The insulation element 20 as depicted in figures 1 to 3 further comprises an outer sealing section 29, which is shaped like an O-ring and surrounds all insulation sections 22 of the insulation element 20. The outer sealing section 29 is formed as single piece together with the insulation element 20. The outer sealing section 29 may be used, for example, as a sealing element when the electrical feedthrough assembly 1 is mounted to a housing or a part of a housing of a device such as an e-compressor. In order to provide a good seal between the outer sealing section 29 and the base body 10 and/or to provide a good seal between the inner sealing section 28 and the base body 10, it is preferred to arrange a sealing area 60 on the surface of the base body 10 in which the surface of the base body 10 is smooth and preferably free from any damages such as scratches.

The insulation sections 22 of the exemplary embodiment further comprise an extension portion 36 so that the cylindrical section 32 extends beyond the top wall 34 defining the cavity 30. The extension portions 36 surrounds the conductor 12 at a distance and extends an insulation or creeping distance further. The extension portion 36 may be provided with ribs or ridges 38 configured to form a form-fit connection with a connector that may be slid over the conductor 12 to form an electrical connection. By means of the ridges 38, such a connector may be secured in place. Further, the ridges 38 may provide a seal to prevent dirt or fluids from entering the space between the conductor 12 and the extension portion 36 when a connector is attached.

For secure attachment of the insulation element 20 to the base body 10 and in order to provide additional electrical insulation, an adhesive 40 such as glue or a casting material fills the cavity 30. In the shown exemplary embodiment, the adhesive 40 fills the entire cavity 30. The adhesive 40 has been introduced into the cavity after placement of the insulation element 20 onto the base body 10 and thus after formation of the cavity 30 through a further opening 26 in the top wall 34 of the insulation section 22. In the exemplary embodiment of figures 1 to 3, each insulation section 22 has four further openings 26, which allow direct access to the cavity 30 from the outside. For example, one or more needles may be inserted through one or more of the further openings 26 to inject the adhesive 40 into the cavity 30. Introduction of the adhesive 40 is carried out for each of the insulation sections 22 and thus for each of the cavities 30 so that the insulation element 20 is securely attached and insulated. Introduction of the adhesive 40 can be performed simultaneously for all insulation sections 22, for example by providing multiple injection needles. Preferably, at least one of the further openings 26 of each insulation section 22 remains open during the introduction of the adhesive 40 so that air contained in the cavity 30 may vent out through the respective further opening 26. This allows for a bubble-free filling of the cavity 30.

In order to improve adhesion of the adhesive 40 to the base body 10, it is preferred to arrange an adhesion area 50 on the surface of the base body 10 in which the surface of the base body 10 is roughened. The roughened surface within the adhesion area 50 provides structures such as indentations and grooves, which increase the surface area and may even provide undercuts for improving adhesion of the adhesive 40.

The cavity 30 can be filled partially or completely with the adhesive 30. In case of a partial fill, sufficient adhesive 40 is injected to cover the surface of the base body 10, the exposed surface of the fixation material 16 and parts of the surfaces of the cylindrical section 32 forming the sidewall of the cavity 30 as well as a part of the surface of the conductor 12. The remaining part of the volume of the cavity 30 can serve as a reservoir to compensate for tolerances in the dosing of the adhesive 40. Preferably, the cavity 30 is completely filled with the adhesive 40. In this case, the volume of the further openings 26 serves as a reservoir for any excess adhesive 40. An overflow of adhesive 40 out of the space defined by the cavity 30 can thus be avoided. In particular, the sealing area 60 of the base body 10 as well as the electrical conductor 12 in the region of the extension portion 36 are not covered by adhesive 40. The sealing area 60 can thus provide a smooth surface suitable for forming a seal and the surface of the portion of the electrical conductor 12 located within the extension portion 36 is suitable for forming a reliable electrical contact.

Figure 4 shows a perspective view of the insulation element 20 of the exemplary embodiment of the electrical feedthrough assembly 1 shown in figures 1 to 3.

The insulation element 20 of the exemplary embodiment has three insulation sections 22 of which the cylindrical sections 32 are clearly visible in the perspective view of figure 4. In further embodiments, the insulation element 20 may comprise a different number of insulation sections 22, in particular one for each conductor 12. However, it is also possible to configure an insulation section 22 such that a single insulation section 22 could accommodate more than one conductor 12, for example two, three or four conductors 12.

The insulation element 20 as depicted in figure 4 is configured as a single piece made from an electrical insulating material. The insulation element 20 is preferably obtained as a mold part, for example by means of injection molding. In particular, all insulation sections 22 as well as the outer sealing section 29 as well as the inner sealing section 28, see figures 2 and 3, are a single piece.

Preferably, the material of the insulation element 20 is a resilient material such as a rubber material. However, other electrically insulating materials such as thermoplastic or thermosetting plastic materials are also possible.

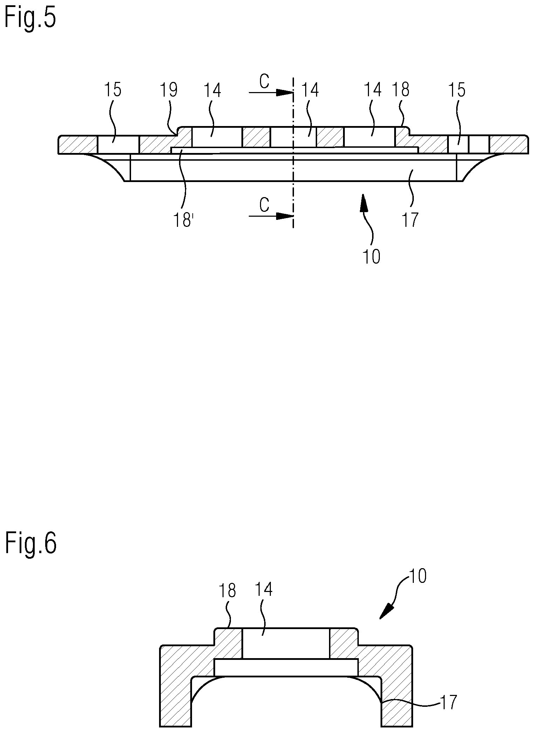

Figures 5 and 6 show a second embodiment of a base body 10 suitable for a feedthrough assembly 1 as described with respect to figures 1 to 4. Figure 5 shows a first cross section view from the side and figure 6 shows a second cross section view along the plane marked with C-C in figure 5. The base body 10 has an elongated shape similar to the base body 10 of the embodiment of figures 1 to 3 and also has three openings 14 for allowing conductors 12, see figures 1 to 3, to be fed through the base body 10.

In contrast to the base body 10 of figures 1 to 3, the second embodiment of the base body 10 is not flat and comprises means for improving resistance against deformation such as bending. In the example depicted in figures 5 and 6, the base body comprises pulled up edges 17 as well as an elevated area 18 and a corresponding recess area 18'.

The pulled up edges 17 extend along the long sides of the elongated shape of the base body 10 and provide increased strength against deformation of the base body 10. The elevated area 18 is in this exemplary embodiment of figures 5 and 6 a single area encompassing all openings 14. In an alternative embodiment, the base body could comprise several separated elevated areas 18, wherein each of the elevated areas 18 encompasses a single one of the openings 14.

The pulled up edges 17 as well as the elevated area 18 and corresponding recess area 18' may be formed into a plate like precursor e.g. by means of a stamping process to form the base body 10. Such a stamping process provides for both the elevated area 18 as well as the recess areas 18'. Although by the stamping process the elevated area 18 as well as the recess area 18' are provided, the elevated area 18 and the recess area 18' do not necessarily have a complementary geometry. Especially the form of side walls 19 of the recess area 18' and/or the elevated area 18 can be different. Furthermore each of the measures, the pulled up edges 17, the recess area 18' as well as the elevated area 18 provide for a higher stiffness and pressure resistance of the base body 10.

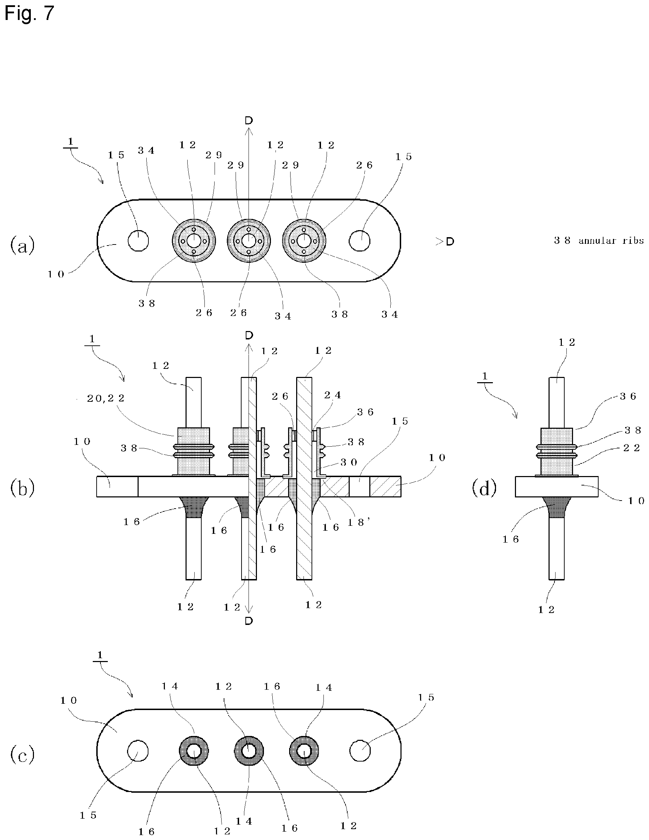

Figures 7a to d show an embodiment of the electrical feedthrough assembly 1 having individual insulation elements 20 for each of the conductors. Figure 7a shows a top-view, figure 7b shows a front-view with partial cross-section, figure 7c shows a bottom view and figure 7d a side view.

The base body 10 is in this embodiment configured as a flat elongated plate with two parallel straight sides and two curved sides. The base body 10 comprises two screw bores 15 and three openings 14. The electrical feedthrough assembly 1 of figures 7a to 7d comprises three conductors 12, wherein each conductor 12 is fed through one of the openings 14 and is held within the respective opening 14 by means of a fixation material 16.

As can best be seen in figures 7b and 7d, the fixation material 16 is arranged such that it does not extend beyond the respective opening 14 on the top-facing side. On the bottom-facing side, the fixation material 16 extends beyond the respective opening 14 and forms a meniscus around the respective conductor 12.

In the embodiment of figures 7a to 7d, the electrical feedthrough assembly 1 comprises three insulation elements 20, wherein each if the insulation elements 20 has a single insulation section 22, each associated with one of the conductors 12.

Around each of the openings 14, the base body 10 has a recess area 18', which is shaped and arranged such that one of the insulation elements 20 is partially received within the formed recess. Walls of the recess area 18' and an outer sealing section 29 of an insulation element 20 form a seal so that within the insulation section 22 a cavity 30 is formed surrounding a conductor 12.

The shape of the insulation section 22 of an insulation element 20 is similar to the embodiment described with respect to figures 1 to 4, but the extension portion 36 of the embodiment of figures 7a to 7d does not feature annular grooves 38 located on the inwards facing wall. Instead, the embodiment of figures 7a to 7d has annular ribs 38 arranged on the outward facing wall. In further embodiments it is possible to arrange grooves and/or ribs 38 on both the outside and the inside facing walls of the extension portion 36.

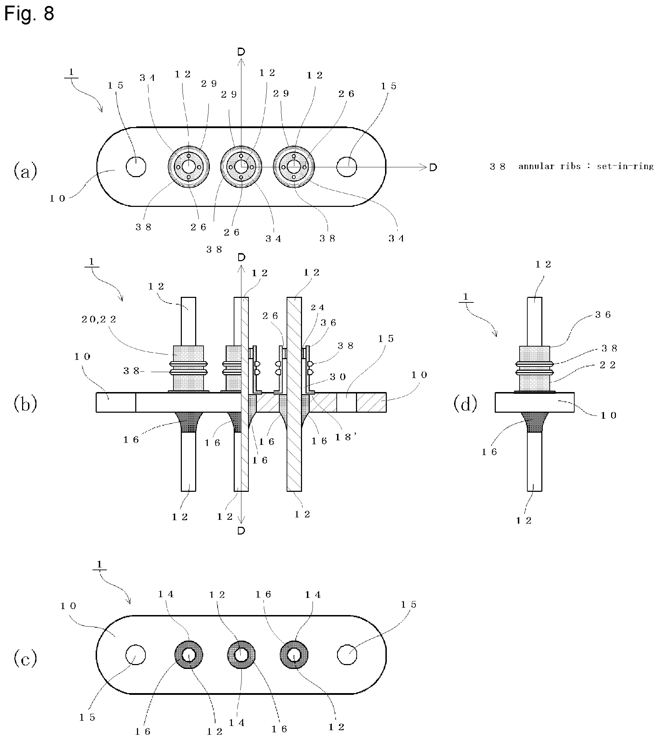

Figures 8a to 8d show an embodiment of a feedthrough assembly 1 comprising set-in-rings. The embodiment of figures 8a to 8d corresponds to the embodiment described with respect to figures 7a to 7d, except for the configuration of the annular ribs 38. In the embodiment of figures 8a to 8d, set-in-rings are arranged in corresponding grooves in the outer wall of the extension portions 36. Such an arrangement allows the use of a material for the annular rubs 38 which is different from the material of the cylindrical wall forming the extension portion 36.

Although the present invention has been described with reference to preferred examples of embodiments, it is not limited thereto but can be modified in a variety of ways within the limits of the scope of the appended claims.

### List of reference numerals

- 1: electrical feedthrough assembly
- 10: base body
- 12: conductor
- 14: opening
- 15: screw bore
- 16: fixation material
- 17: pulled up edge
- 18: elevated area
- 18': recess area
- 19: side wall

- 20: insulation element
- 22: insulation section
- 24: conductor opening
- 26: further opening
- 28: inner sealing section
- 29: outer sealing section

- 30: cavity
- 32: cylindrical section
- 34: top wall
- 36: extension portion
- 38: annular grooves

- 40: adhesive
- 50: adhesion area
- 60: sealing area

## Claims

1. Electrical feedthrough assembly (1) comprising a base body (10), for the attachment to a housing, with at least one opening (14) for at least one conductor (12) embedded in a fixation material (16) that is fed into each of the respective openings (14) and sealing the respective opening (14), wherein
said electrical feedthrough assembly (1) further comprises
at least one insulation element (20) affixed to the base body (10), the insulation element (20) having at least an insulation section (22) for a conductor (12), the insulation section (22) having an conductor opening (24) through which the respective conductor (12) is fed, the insulation element (20) being configured and arranged such that a cavity (30) is formed between the base body (10) and the insulation section (22), **characterized in that** the insulation section (22) further comprises at least one further opening (26) allowing access to the cavity (30), the cavity (30) being at least partially filled with an adhesive (40) for forming a connection between the base body (10) and the insulation section (22) of the insulation element (20).

2. Electrical feedthrough assembly (1) according to claim 1, wherein the cavity (30) at least partially surrounds the respective conductor (12).

3. Electrical feedthrough assembly (1) according to claim 1 or 2, wherein a wall of the conductor opening (24) touches the respective conductor (12).

4. Electrical feedthrough assembly (1) according to any one of claims 1 to 3, wherein the insulation section (22) has a cylindrical portion (32) having an inner sealing section (28) touching the base body (10).

5. Electrical feedthrough assembly (1) according to any one of claims 1 to 4, wherein the cavity (30) of the insulation section (22) comprises a top wall (34), the top wall (34) having the conductor opening (24) and the at least one further opening (26).

6. Electrical feedthrough assembly (1) according to claim 4 and 5, wherein the cylindrical section (32) has an extension portion (36) which extends beyond the top wall (34), the extension portion (36) at least partially surrounding the respective conductor (12) in a distance, wherein grooves (38) and/or rings are arranged on the inside facing wall of the extension portion (36) and/or are arranged on the outside facing wall of the extension portion (36).

7. Electrical feedthrough assembly (1) according to any one of claims 1 to 6, wherein the insulation section (22) comprises 1 to 10, preferably 2 to 8, especially preferably 4 to 6 further openings (26).

8. Electrical feedthrough assembly (1) according to any one of claims 1 to 7, wherein the insulation element (20) comprises an outer sealing section (29), which surrounds all insulation sections (22) of the insulation element (20) and touches the base body (10), the outer sealing section (29) preferably having an O-ring like shape.

9. Electrical feedthrough assembly (1) according, to any one of claims 1 to 8, wherein the insulation element (20) is made from a resilient material, in particular a natural or synthetic rubber, in particular a fluoroelastomer, an ethylene propylene diene monomer (EPDM) rubber, a hydrogenated nitrile-butadiene rubber (HNBR) or a silicone rubber.

10. Electrical feedthrough assembly (1) according to any one of claims 1 to 8, wherein the adhesive (40) is an adhesive casting material, preferably an epoxy adhesive.

11. Electrical feedthrough assembly (1) according to any one of claims 1 to 10, wherein the fixation material (16) does not extend beyond the at least one opening (14) in the base body (10) on the side facing towards the insulation element (20).

12. Electrical feedthrough assembly (1) according to any one of claims 1 to 11, wherein the base body (10) comprises an adhesion area (50) with a roughness for bonding with the adhesive (40) adjacent to the cavity (30) and/or a sealing area (60) having a smooth surface which provides for a seal between the base body (10) and the insulation element (20).

13. Electrical feedthrough assembly (1) according to any one of claims 1 to 12, wherein the base body (10), the at least one conductor (12) and the fixation material (16) form a compression seal.

14. Method for manufacturing of an electrical feedthrough assembly (1) according to any one of claims 1 to 13, comprising the steps of
- providing of a base body assembly, the base body assembly comprising a base body (10) having at least one conductor(12) embedded in fixation material (16) that is fed through an opening (14) of the base body (10) providing a glass-to-metal seal (GTMS),
- providing of an insulation element (20) and placing of the insulation element (20) such that the at least one conductor(12) is fed through a conductor opening (24) of an insulation section (22) of the insulation element (20), wherein the insulation element (20) is configured and arranged such that a cavity (30) is formed between the base body (10) and the insulation section (22), and
- injection of an adhesive (40) through into the cavity (30).

15. Electric compressor comprising an electrical feedthrough assembly (1) according to one of claims 1 to 13 or an electrical feedthrough assembly (1) manufactured according to the method of claim 14.

## Patentansprüche

1. Elektrische Durchführungsanordnung (1), umfassend einen Grundkörper (10) zur Anbringung an einem Gehäuse, mit mindestens einer Öffnung (14) für mindestens einen Leiter (12), der in einem Fixiermaterial (16) eingebettet ist, das in jede der entsprechenden Öffnungen (14) geführt ist und die entsprechende Öffnung (14) abdichtet,
wobei
die elektrische Durchführungsanordnung (1) ferner umfasst:
mindestens ein Isolierelement (20), das an dem Grundkörper (10) befestigt ist, wobei das Isolierelement (20) mindestens einen Isolierabschnitt (22) für einen Leiter (12) aufweist, wobei der Isolierabschnitt (22) eine Leiteröffnung (24) aufweist, durch die der entsprechende Leiter (12) geführt ist, wobei das Isolierelement (20) derart gestaltet und angeordnet ist, dass ein Hohlraum (30) zwischen dem Grundkörper (10) und dem Isolierabschnitt (22) gebildet ist, **dadurch gekennzeichnet, dass** der Isolierabschnitt (22) ferner mindestens eine weitere Öffnung (26) umfasst, die Zugang zu dem Hohlraum (30) ermöglicht, wobei der Hohlraum (30) zumindest teilweise mit einem Klebstoff (40) gefüllt ist, zum Bilden einer Verbindung zwischen dem Grundkörper (10) und dem Isolierabschnitt (22) des Isolierelements (20).

2. Elektrische Durchführungsanordnung (1) nach Anspruch 1, wobei der Hohlraum (30) den entsprechenden Leiter (12) zumindest teilweise umgibt.

3. Elektrische Durchführungsanordnung (1) nach Anspruch 1 oder 2, wobei eine Wand der Leiteröffnung (24) den entsprechenden Leiter (12) berührt.

4. Elektrische Durchführungsanordnung (1) nach einem der Ansprüche 1 bis 3, wobei der Isolierabschnitt (22) einen zylindrischen Abschnitt (32) mit einem inneren Abdichtungsabschnitt (28), der den Grundkörper (10) berührt, aufweist.

5. Elektrische Durchführungsanordnung (1) nach einem der Ansprüche 1 bis 4, wobei der Hohlraum (30) des Isolierabschnitts (22) eine obere Wand (34) aufweist, wobei die obere Wand (34) die Leiteröffnung (24) und die mindestens eine weitere Öffnung (26) aufweist.

6. Elektrische Durchführungsanordnung (1) nach Anspruch 4 und 5, wobei der zylindrische Abschnitt (32) einen Erweiterungsabschnitt (36) aufweist, der sich jenseits der oberen Wand (34) erstreckt, wobei der Erweiterungsabschnitt (36) den entsprechenden Leiter (12) in einem Abstand zumindest teilweise umgibt, wobei Rillen (38) und/oder Ringe an der nach innen weisenden Wand des Erweiterungsabschnitts (36) angeordnet sind und/oder an der nach außen weisenden Wand des Erweiterungsabschnitts (36) angeordnet sind.

7. Elektrische Durchführungsanordnung (1) nach einem der Ansprüche 1 bis 6, wobei der Isolierabschnitt (22) 1 bis 10, vorzugsweise 2 bis 8, besonders bevorzugt 4 bis 6 weitere Öffnungen (26) aufweist.

8. Elektrische Durchführungsanordnung (1) nach einem der Ansprüche 1 bis 7, wobei das Isolierelement (20) einen äußeren Abdichtungsabschnitt (29) umfasst, der alle Isolierabschnitte (22) des Isolierelements (20) umgibt und den Grundkörper (10) berührt, wobei der äußere Abdichtungsabschnitt (29) vorzugsweise eine O-Ring-artige Form aufweist.

9. Elektrische Durchführungsanordnung (1) nach einem der Ansprüche 1 bis 8, wobei das Isolierelement (20) aus einem elastischen Material, insbesondere einem natürlichen oder synthetischen Kautschuk, insbesondere einem Fluorelastomer, einem Ethylen-Propylen-Dien-Monomer-(EPDM-)Kautschuk, einem hydrierten Nitril-Butadien-Kautschuk (HNBR) oder einem Silikonkautschuk, hergestellt ist.

10. Elektrische Durchführungsanordnung (1) nach einem der Ansprüche 1 bis 8, wobei der Klebstoff (40) ein Kautschukgussmaterial, vorzugsweise ein Epoxid-Klebstoff, ist.

11. Elektrische Durchführungsanordnung (1) nach einem der Ansprüche 1 bis 10, wobei sich das Fixiermaterial (16) nicht jenseits der mindestens einen Öffnung (14) in dem Grundkörper (10) auf der Seite, die zu dem Isolierelement (20) weist, erstreckt.

12. Elektrische Durchführungsanordnung (1) nach einem der Ansprüche 1 bis 11, wobei der Grundkörper (10) eine Haftfläche (50) mit einer Rauigkeit zum Verkleben mit dem Klebstoff (40) angrenzend an den Hohlraum (30) und/oder einen Abdichtungsbereich (60) mit einer glatten Oberfläche, die für eine Abdichtung zwischen dem Grundkörper (10) und dem Isolierelement (20) sorgt, umfasst.

13. Elektrische Durchführungsanordnung (1) nach einem der Ansprüche 1 bis 12, wobei der Grundkörper (10), der mindestens eine Leiter (12) und das Fixiermaterial (16) eine Kompressionsdichtung bilden.

14. Verfahren zur Herstellung einer elektrischen Durchführungsanordnung (1) nach einem der Ansprüche 1 bis 13, die folgenden Schritte umfassend:
- Bereitstellen einer Grundkörperanordnung, wobei die Grundkörperanordnung einen Grundkörper (10) mit mindestens einem Leiter (12) umfasst, der in einem Fixiermaterial (16) eingebettet ist, das durch eine Öffnung (14) des Grundkörpers (10) geführt ist, wodurch eine Glas-Metall-Dichtung (GTMS) bereitgestellt wird,
- Bereitstellen eines Isolierelements (20) und Platzieren des Isolierelements (20) derart, dass der mindestens eine Leiter (12) durch eine Leiteröffnung (24) eines Isolierabschnitts (22) des Isolierelements (20) geführt wird, wobei das Isolierelement (20) derart gestaltet und angeordnet wird, dass ein Hohlraum (30) zwischen dem Grundkörper (10) und dem Isolierabschnitt (22) gebildet wird, und
- Einspritzen eines Klebstoffs (40) hindurch in den Hohlraum (30).

15. Elektrischer Kompressor, eine elektrische Durchführungsanordnung (1) nach einem der Ansprüche 1 bis 13 oder eine gemäß dem Verfahren nach Anspruch 14 hergestellte elektrische Durchführungsanordnung (1) umfassend.

## Revendications

1. Ensemble de traversée électrique (1) comprenant un corps de base (10), pour la fixation à un boîtier, avec au moins une ouverture (14) pour au moins un conducteur (12) incorporé dans un matériau de fixation (16) qui est alimenté dans chacune des ouvertures respectives (14) et qui obture de façon étanche l'ouverture respective (14),
ledit ensemble de traversée électrique (1) comprenant en outre au moins un élément d'isolation (20) fixé au corps de base (10), cet élément d'isolation (20) ayant au moins une section d'isolation (22) pour un conducteur (12), cette section d'isolation (22) ayant une ouverture pour conducteur (24) à travers laquelle le conducteur respectif (12) est alimenté, l'élément d'isolation (20) étant configuré et disposé de manière à ce qu'une cavité (30) soit formée entre le corps de base (10) et la section d'isolation (22), **caractérisé en ce que** la section d'isolation (22) comporte en outre au moins une autre ouverture (26) permettant d'accéder à la cavité (30), la cavité (30) étant remplie au moins partiellement avec un adhésif (40) pour former une connexion entre le corps de base (10) et la section d'isolation (22) de l'élément d'isolation (20) .

2. Ensemble de traversée électrique (1) selon la revendication 1, dans lequel la cavité (30) entoure au moins partiellement le conducteur respectif (12).

3. Ensemble de traversée électrique (1) selon la revendication 1 ou 2, dans lequel une paroi de l'ouverture pour le conducteur (24) touche le conducteur respectif (12).

4. Ensemble de traversée électrique (1) selon l'une quelconque des revendications 1 à 3, dans lequel la section d'isolation (22) a une partie cylindrique (32) ayant une section d'étanchéité intérieure (28) qui touche le corps de base (10).

5. Ensemble de traversée électrique (1) selon l'une quelconque des revendications 1 à 4, dans lequel la cavité (30) de la section d'isolation (22) comporte une paroi supérieure (34), cette paroi supérieure (34) ayant l'ouverture pour conducteur (24) et l'au moins une autre ouverture (26).

6. Ensemble de traversée électrique (1) selon les revendications 4 et 5, dans lequel la section cylindrique (32) a une partie de prolongement (36) qui s'étend au-delà de la paroi supérieure (34), cette partie de prolongement (36) entourant au moins partiellement le conducteur respectif (12) sur une distance, des gorges (38) ou des anneaux étant disposés sur la paroi intérieure de la partie de prolongement (36) et/ou étant disposés sur la paroi extérieure de la partie de prolongement (36).

7. Ensemble de traversée électrique (1) selon l'une quelconque des revendications 1 à 6, dans lequel la section d'isolation (22) comporte 1 à 10, de préférence 2 à 8, encore mieux 4 à 6 autres ouvertures (26).

8. Ensemble de traversée électrique (1) selon l'une quelconque des revendications 1 à 7, dans lequel l'élément d'isolation (20) comporte une section d'étanchéité extérieure (29), qui entoure toutes les sections d'isolation (22) de l'élément d'isolation (20) et qui touche le corps de base (10), cette section d'étanchéité extérieure (29) ayant de préférence une forme semblable à un joint torique.

9. Ensemble de traversée électrique (1) selon l'une quelconque des revendications 1 à 8, dans lequel l'élément d'isolation (20) est fait à partir d'un matériau élastique, en particulier un caoutchouc naturel ou synthétique, en particulier un élastomère fluoré, un caoutchouc monomère d'éthylène-propylène-diène (EPDM), un caoutchouc nitrile-butadiène hydrogéné (HNBR) ou un caoutchouc de silicone.

10. Ensemble de traversée électrique (1) selon l'une quelconque des revendications 1 à 8, dans lequel l'adhésif (40) est un matériau de moulage adhésif, de préférence un adhésif époxyde.

11. Ensemble de traversée électrique (1) selon l'une quelconque des revendications 1 à 10, dans lequel le matériau de fixation (16) ne s'étend pas au-delà de l'au moins une ouverture (14) dans le corps de base (10) sur le côté tourné vers l'élément d'isolation (20).

12. Ensemble de traversée électrique (1) selon l'une quelconque des revendications 1 à 11, dans lequel le corps de base (10) comporte une zone d'adhérence (50) avec une rugosité pour la liaison avec l'adhésif (40) adjacente à la cavité (30) et/ou une zone d'étanchéité (60) ayant une surface lisse qui fournit un joint étanche entre le corps de base (10) et l'élément d'isolation (20) .

13. Ensemble de traversée électrique (1) selon l'une quelconque des revendications 1 à 12, dans lequel le corps de base (10), l'au moins un conducteur (12) et le matériau de fixation (16) forment un joint à compression.

14. Procédé pour la fabrication d'un ensemble de traversée électrique (1) selon l'une quelconque des revendications 1 à 13, comprenant les étapes suivantes :
- la fourniture d'un ensemble corps de base, cet ensemble corps de base comprenant un corps de base (10) ayant au moins un conducteur (12) incorporé dans un matériau de fixation (16) qui est alimenté à travers une ouverture (14) du corps de base (10) fournissant une étanchéité verre-métal (GTMS),
- la fourniture d'un élément d'isolation (20) et la mise en place de cet élément d'isolation (20) de manière à ce que l'au moins un conducteur (12) soit alimenté à travers une ouverture pour conducteur (24) d'une section d'isolation (22) de l'élément d'isolation (20), l'élément d'isolation (20) étant configuré et disposé de manière à ce qu'une cavité (30) soit formée entre le corps de base (10) et la section d'isolation (22), et
- l'injection d'un adhésif (40) dans la cavité (30).

15. Compresseur électrique comportant un ensemble de traversée électrique (1) selon une des revendications 1 à 13 ou un ensemble de traversée électrique (1) fabriqué conformément au procédé selon la revendication 14.
